# EUROPEAN PATENT SPECIFICATION

(11) **EP 1 896 318 B1**
(45) Date of publication and mention of the grant of the patent: **06.05.2009**
(21) Application number: 05753864.7
(22) Date of filing: 17.06.2005
(51) Int. Cl.: B62J 1/20

(54) **STRUCTURE OF SADDLE IN PARTICULAR FOR CYCLES, MOTORCYCLES AND PEDAL MACHINES**
STRUKTUR FÜR EINEN SATTEL, INSBESONDERE FÜR FAHRRÄDER, MOTORRÄDER UND PEDALANGETRIEBENE MASCHINEN
STRUCTURE DE SELLE, NOTAMMENT POUR VELOS, MOTOS ET MACHINES A PEDALE

(43) Date of publication of application: 12.03.2008
(73) Proprietor: SELLE ROYAL S.P.A., 36050 Pozzoleone (Vicenza) (IT)
(72) Inventor: LOSIO, Massimo, I-31011 Asolo (IT)
(74) Representative: Feltrinelli, Secondo Andrea
(86) International application number: PCT/IB2005/001719
(87) International publication number: WO 2006/134416

(56) References cited:
- US-A- 4 451 083
- US-A- 5 697 671
- US-A- 5 904 396
- US-A- 5 944 380
- US-B1- 6 481 792

## Description

### Field of the Invention

This invention generally finds application in the field of accessories for bicycles and motorcycles and particularly relates to a saddle structure as defined in the preamble of claim 1, for bicycles, motorcycles and pedal-operated machines.

### Background art

A number of saddles or similar structures for bicycles are known, which have differential rigidity portions for adequate distribution of pressure on the user.

Particularly, IT-A-VI2002A000208 discloses a saddle that comprises a yieldable pad and a rigid frame having one or more differential rigidity portions adapted to facilitate the pedaling motion.

The differential rigidity portions are positioned symmetrically along the edges of the saddle, on opposite sides of a longitudinal axis, in such a manner as to interact with the inside thighs of a user, or are located at a rear edge of the saddle.

A drawback of this arrangement is its poor flexibility, which is caused by the fact that the saddle has a fixed configuration, that may be inadequate or uncomfortable depending on how the saddle is used. Furthermore comfort perception is subjective and strongly influenced by the particular anatomic structure of the user. Therefore, the user shall adapt to the fixed configuration of the saddle, which causes a reduced comfort degree.

US-A-5904396 discloses a saddle having one or more resilient inserts and a gel material to improve the distribution of contact pressure on the user. Unlike the previous example, the inserts are positioned inside the saddle. Nevertheless, this arrangement also has fixed inserts, and the configuration of the saddle cannot be adapted to different needs.

US-A-5330249 and US-A-20020069464 disclose each a bicycle saddle which comprises a fixed support base defining a seat surface and a removable deformable cushion. Particularly, in US-A-5330249 the deformable cushion is placed on the seat surface, whereas in the arrangement of US-a-20020069464, the deformable cushion has a pair of absorbent side portions and a central portion that lies on the support base to keep the side portions in position.

A drawback of these arrangements is that the configuration of the saddle is poorly adaptable to different needs. In fact, in the arrangement of the former document, the replacement of the deformable cushion can only involve a change of the overall resilience of the seat surface, whereas in the arrangement of the latter document, the deformable cushion only allows to adjust the side resilience of the saddle in the inside thigh areas of the user.

From US-B1-6481792 is known a saddle structure having all the features of the preamble of the independent claim 1. In particular, this known saddle structure comprises a main body which defines a seat surface for a user and at least one secondary member removably securable to the main body so as to define the above seat surface therewith.

This saddle also is not easily adaptable to the different uses of the and does not allow to control the saddle properties in the areas of interest.

### Summary of the invention

A primary object of this invention is to obviate the above drawbacks, while providing a cost-effective saddle structure.

A particular object is to provide a saddle structure that can fit different user needs.

A further object of the invention is to provide a saddle structure that is comfortable and reduces the stresses exerted on the user, allowing an optimized distribution thereof.

Another particular object is to provide a saddle structure that is sturdy and reliable.

A further object of the invention is to provide a saddle structure that facilitates the control of the vehicle on which it is fitted.

These objects, as well as other objects that will be more apparent hereafter, are achieved by providing a saddle structure according to claim 1.

Thanks to this particular configuration, the support structure may be easily adapted to various needs of a single user or different users.

### Brief Description of the Drawings

Further characteristics and advantages of the invention will be more apparent from the detailed description of a few preferred, non-exclusive embodiments of a saddle structure according to the invention, which are described as non-limiting examples with the help of the annexed drawings, in which:

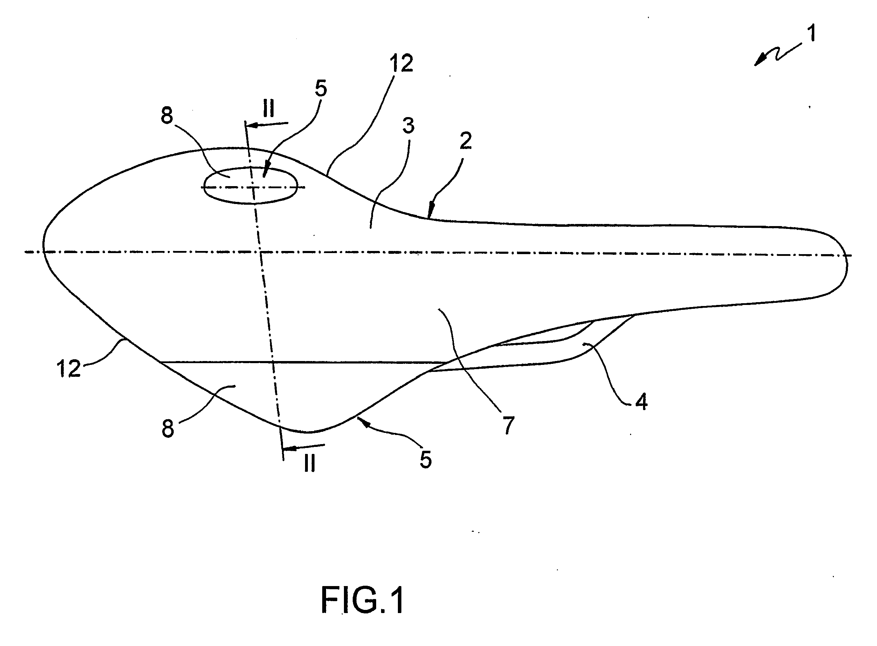

FIG. 1 is a general perspective view of the saddle structure according to the invention;

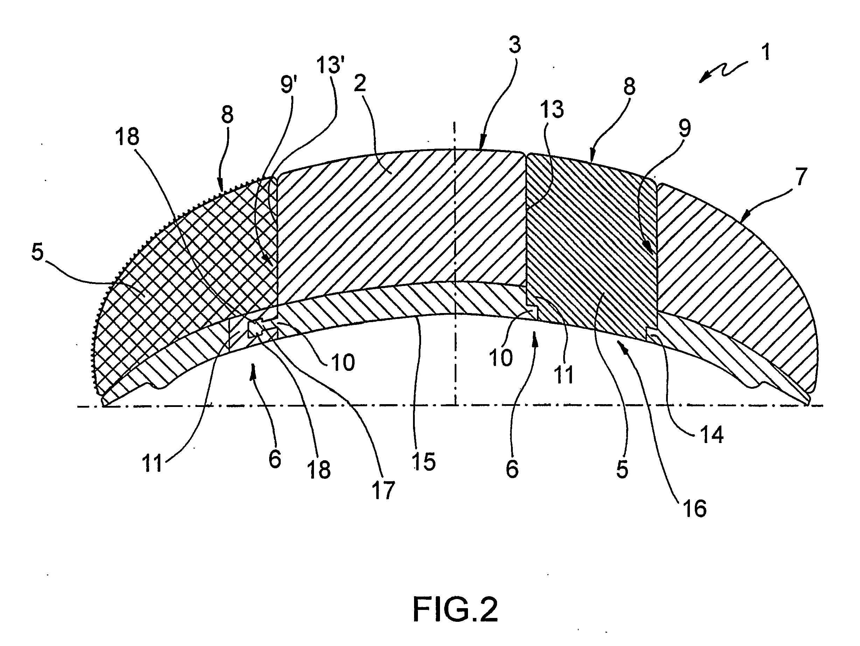

FIG. 2 is a sectional view taken along a transverse plane II-II of FIG. 1.

### Detailed description of a preferred embodiment

Particularly referring to the above figures, a saddle structure according to the invention is described, which is generally denoted by numeral 1, and is particularly deigned for bicycles, motorcycles and other pedal-operated machines.

The structure 1 comprises a main body 2 which has predetermined elastic and surface properties, and defines a seat surface 3 for a user. Means 4 are further provided for connection of the main body 2 to a frame (not shown in the annexed drawings) of the machine.

One feature of the invention is that the structure 1 comprises at least one secondary support member 5, which may be removably secured to the main body 2 by releasable connection means 6, to define the seat surface 3 with such body 2. Furthermore, the secondary support member 5 has elastic and/or surface properties different from those of the main body 2.

There may be provided one secondary support member 5 only. In alternative embodiments, the structure 1 may comprise a plurality of secondary support members 5, which may be also removably secured to the main body 2 by respective releasable connection means 6.

The main body 2 and each secondary member 5 may have respective top surfaces 7, 8, connected together to form a substantially continuous seat surface 3 under the rider's weight. More in detail, the continuity of the seat surface 3 may be advantageously obtained by providing suitable housings 9, 9' for the secondary members 5 in the main body 2. Each secondary member 5 may be inserted in a corresponding housing 9, 9' so that its top surface 8 is substantially aligned with the top surface 7 of the main body 2.

The connection means 6 may be located at each housing 9, 9' to suitably hold each secondary member 5 in the corresponding housing 9, 9' while the structure 1 is being used. Particularly, the connection means 6 may include a first portion 10 integral with the main body 2 for each of the housings 9 and a second portion 11 integral with the corresponding secondary member 5, which is designed to interact with the first portion 10 to removably secure the corresponding secondary member 5.

To ensure an optimized fit between each secondary member 5 and the main body 2, the second portion 11 of the connection means 6 may have a different rigidity, particularly higher or lower than that of the member 5 integral therewith. Also, the second portion 11 may be made of one piece with the corresponding secondary member 5.

The housings 9, 9' may be of various types and may be particularly formed inside the main body 2 or at an outer peripheral edge 12 of the main body 2.

Particularly, each housing 9 in the main body 2 may have a substantially concave wall at the interface with the corresponding secondary member 5. The wall 13 may also have a different shape and may particularly have a vertical orientation, as shown in the Figures, and an oval, elliptical or circular plan shape. Otherwise, the wall 13 may have an at least partially convex design, and possibly a plan shape other than the one described above.

Furthermore, the first portion 10 of the connection means 6 may have an edge 14 that projects out of the concave wall 13.

Such projecting edge 14 may be contoured to support the corresponding second portion 11 of the connection means 6 and may be provided inside the main body 2 or connected to a bottom wall 15 of the latter. Thanks to this arrangement, the projecting edge 14 allows to effectively hold the corresponding secondary member 5 while being substantially invisible from the outside, and helping to provide a structure 1 having a high aesthetic quality.

Advantageously, one or more housings 9 in the main body 2 may have a lower opening 16 at the bottom wall 15 of the main body 2, to facilitate removal of the corresponding secondary member 5.

As stated above, one or more housings 9' may be located at the outer peripheral edge 12 of the main body 2. These peripheral housings 9' may have an at least partially convex or plane wall 13' at the interface with the corresponding secondary member 5. In this case, the first portion 10 of the connection means 6 may have an extension 17 projecting out of the at least partially convex wall 13', for engagement in the corresponding second portion 11 of the connection means 6.

More in detail, the second portion 11 integral with a secondary member 5 may have one or more protuberances 18 for engagement with the projecting extension 17 integral with the main body 2, to prevent disconnection of the latter from the secondary member 5. The protuberances 18 may be provided in the form of appropriately spaced teeth along the outer peripheral edge 12 or may be substantially continuous therealong.

Regarding the housings 9' located at the outer peripheral edge 12, the first and second portions 10, 11 may be covered by the corresponding secondary member 5 or be connected with the bottom wall 15 of the main body 2 to be substantially invisible from the outside.

The secondary members 5 may have different physical and surface properties so that any user may attach a desired secondary member 5 to the main body, depending on his/her anatomic structure or on how the machine is to be used. For example, a secondary member 5 having a lower rigidity than the main body 2 may be attached to a rear portion of the outer peripheral edge 12 when the user expects to ride difficult terrain, to facilitate control of a mountain-bike while not sitting on the saddle. Also, for improved customization, a secondary member 5 may have portions with different rigidities, and the top surface 8 of one or more secondary members 5 may have a surface roughness different from that of the top surface 7 of the main body 2.

The above disclosure clearly shows that the structure of the invention fulfils the proposed objects and particularly allows easy adaptation of shape, rigidity and surface roughness by replacing the secondary members. Furthermore, the latter allow to locally control the above properties in the areas of interest.

The saddle structure of the invention is susceptible of a number of changes and variants, within the inventive concept disclosed in the appended claims. All the details thereof may be replaced by other technically equivalent parts, and the materials may vary depending on different needs, without departure from the scope of the invention as disclosed in the appended claims.

While the structure has been described with particular reference to the accompanying figures, the numerals referred to in the disclosure and claims are only used for the sake of a better intelligibility of the invention and shall not be intended to limit the claimed scope in any manner.

## Claims

1. A saddle structure, particularly for bicycles, motorcycles and other pedal-operated machines with a frame, comprising a main body (2) having predetermined elastic and surface properties, which defines a seat surface (3) for a user, means (4) for connecting said main body (2) to a machine frame, at least one secondary member (5), releasable connection means (6) for removably securing said at least one secondary member (5) to said main body (2), so as to define said seat surface (3) therewith,
**characterized in that** said at least one secondary member (5) has elastic and surface roughness properties different from those of said main body (2), to allow easy adaptation of the saddle structure to different uses and to locally :control the above properties in the areas of interest.

2. A structure as claimed in claim 1, **characterized in that** said main body (2) and said at least one secondary member (5) have respective upper surfaces (7, 8), reciprocally joined to make the seat surface (3) substantially continuous for the user's body.

3. A structure as claimed in claim 1, **characterized in that** it comprises a plurality of secondary members (5), removably securable to said main body (2) with said connection means (6).

4. A structure as claimed in claim 3, **characterized in that** said main body (2) comprises a housing (9, 9') for each of said secondary members (5).

5. A structure as claimed in claim 4, **characterized in that** said connection means (6) are located at each of said housings (9, 9')

6. A structure as claimed in claim 5, **characterized in that** said connection means (6) include a first portion (10) integral with said main body (2) for each of said housings (9, 9') and a second portion (11) integral with the corresponding secondary member (5), for interacting with said first portion (10) to removably secure the corresponding secondary member (5).

7. A structure as claimed in claim 6, **characterized in that** said second portion (11) of said connection means (6) has a rigidity different from that of the corresponding member (5) integral therewith.

8. A structure as claimed in claim 6, **characterized in that** at least one of said housings (9) is formed internally of said main body (2).

9. A structure as claimed in claim 8, **characterized in that** said at least one inner housing (9) has an interface wall (13) that is substantially concave with the corresponding secondary member (5).

10. A structure as claimed in claim 8, **characterized in that** said at least one inner housing (9) has an interface wall (13) that is at least partially convex with the corresponding secondary member (5).

11. A structure as claimed in claim 9, **characterized in that** said first portion (10) of said connection means (6) has an edge (14) projecting out of said concave wall (13) for supporting the corresponding second portion (11) of the connection means (6).

12. A structure as claimed in claim 11, **characterized in that** said projecting edge (14) is provided within said main body (2) or is connected with a bottom wall (15) of the latter.

13. A structure as claimed in claim 12, **characterized in that** said at least one inner housing (9) has a lower opening (16) at the bottom wall (15) of said main body (2), to facilitate removal of the corresponding member (5).

14. A structure as claimed in claim 7, **characterized in that** at least one of said housings (9') is provided at an outer peripheral edge (12) of said main body (2).

15. A structure as claimed in claim 14, **characterized in that** said at least one peripheral housing (9') has an interface wall (13') that is at least partially convex or plane with the corresponding member (5).

16. A structure as claimed in claim 15, **characterized in that** said first portion (10) of said connection means (6) has an extension (17) projecting out of said at least partially convex wall (13') for engagement with the corresponding second portion (11) of the connection means (6).

17. A structure as claimed in claim 16, **characterized in that** said first (10) and second (11) portions at said at least one peripheral housing (9') are covered by the corresponding member (5) or connected with a bottom wall (15) of the main body (2).

18. A structure as claimed in claim 3, **characterized in that** at least one of said elements (5) has portions with different rigidities.

19. A structure as claimed in claim 3, **characterized in that** the top surface (8) of at least one of said elements (5) has a surface roughness different from that of the top surface (7) of said main body (2).

## Patentansprüche

1. Struktur für einen Sattel, insbesondere für Fahrräder, Motorräder und andere pedalbetriebene Maschinen mit einem Rahmen, der einen Hauptkörper (2) aufweist mit vorbestimmten elastischen und Oberflächeneigenschaften, der eine Sitzoberfläche (3) für einen Nutzer bestimmt, Einrichtungen (4) zum Verbinden des Hauptkörpers (2) mit einem Rahmen einer Maschine, mindestens einem zweiten Element (5), lösbaren Verbindungseinrichtungen (6) zur lösbaren Befestigung des mindestens einen zweiten Element (5) an dem Hauptkörper (2), um so damit die Sitzoberfläche (3) zu bilden,
**dadurch gekennzeichnet, dass** das mindestens eine zweite Element(5) elastische und Oberflächenrauhigkeitseigenschaften hat, die sich unterscheiden von denen des Hauptkörpers (2), um einfache Anpassung der Struktur des Sattels an unterschiedliche Verwendungen zu ermöglichen und um örtlich die oben genannten Eigenschaften in den interessanten Bereichen zu steuern.

2. Struktur gemäß Anspruch 1, **dadurch gekennzeichnet, dass** der Hauptkörper (2) und das mindestens eine zweite Element (5) jeweils obere Flächen (7, 8) aufweisen, die umgekehrt verbunden sind, um die Sitzoberfläche (3) im wesentlichen kontinuierlich für den Körper des Nutzers zu machen.

3. Struktur gemäß Anspruch 1, **dadurch gekennzeichnet, dass** eine Vielzahl von zweiten Elementen (5) vorgesehen sind, die mit den Verbindungseinrichtungen (6) lösbar befestigt sind an dem Hauptkörper (2).

4. Struktur gemäß Anspruch 3, **dadurch gekennzeichnet, dass** der Hauptkörper (2) ein Gehäuse (9, 9') für jedes der zweiten Elemente (5) aufweist.

5. Struktur gemäß Anspruch 4, **dadurch gekennzeichnet, dass** die Verbindungseinrichtungen (6) an jedem der Gehäuse (9, 9') angeordnet sind.

6. Struktur gemäß Anspruch 5, **dadurch gekennzeichnet, dass** die Verbindungseinrichtungen (6) einen ersten Abschnitt (10) umfassen, der integral ist mit dem Hauptkörper (2) für jedes der Gehäuse (9, 9') und einen zweiten Abschnitt (11) umfassen, der integral ist mit dem entsprechenden zweiten Element (5) zum Zusammenwirken mit dem ersten Abschnitt (10), um das entsprechende zweite Elemente (5) lösbar zu befestigen.

7. Struktur gemäß Anspruch 6, **dadurch gekennzeichnet, dass** der zweite Abschnitt (11) der Verbindungseinrichtungen (6) eine Steifigkeit aufweist, die sich unterscheidet von der des entsprechenden Elements (5), das damit integral ist.

8. Struktur gemäß Anspruch 6, **dadurch gekennzeichnet, dass** mindestens eines der Gehäuse (9) im Inneren des Hauptkörpers (2) gebildet ist.

9. Struktur gemäß Anspruch 8, **dadurch gekennzeichnet, dass** das mindestens eine innere Gehäuse (9) mit einer Zwischenwand (13) versehen ist, die im wesentlichen konkav ist zu dem entsprechenden zweiten Element (5).

10. Struktur gemäß Anspruch 8, **dadurch gekennzeichnet, dass** das mindestens eine innere Gehäuse (9) mit einer Zwischenwand (13) versehen ist, die mindestens teilweise konvex ist zu dem entsprechenden zweiten Element (5).

11. Struktur gemäß Anspruch 9, **dadurch gekennzeichnet, dass** der erste Abschnitt (10) der Verbindungseinrichtungen (6) eine Kante (14) aufweist, die aus der konkaven Wand (13) vorspringt, um den entsprechenden zweiten Abschnitt (11) der Verbindungseinrichtungen (6) zu tragen.

12. Struktur gemäß Anspruch 11, **dadurch gekennzeichnet, dass** die vorspringende Kante (14) in dem Hauptkörper (2) vorgesehen ist oder verbunden ist mit einer Bodenwand (15) des Letzteren.

13. Struktur gemäß Anspruch 12, **dadurch gekennzeichnet, dass** das mindestens eine innere Gehäuse (9) eine untere Öffnung (16) an der Bodenwand (15) des Hauptkörpers (2) aufweist, um das Entfernen des entsprechenden Elements (5) zu erleichtern.

14. Struktur gemäß Anspruch 7, **dadurch gekennzeichnet, dass** mindestens eines der Gehäuse (9') an einer äußeren Umfangskante (12) des Hauptkörpers (2) vorgesehen ist.

15. Struktur gemäß Anspruch 14, **dadurch gekennzeichnet, dass** das mindestens eine äußere Gehäuse (9') eine Zwischenwand (13') hat, die zumindest teilweise konvex oder eben mit dem entsprechenden Element (5) ist.

16. Struktur gemäß Anspruch 15, **dadurch gekennzeichnet, dass** der erste Abschnitt (10) der Verbindungseinrichtungen (6) eine Erstreckung (17) aufweist, die aus der mindestens teilweise konvexen Wand (13') vorspringt zum Eingriff mit dem entsprechenden zweiten Abschnitt (11) der Verbindungseinrichtungen (6).

17. Struktur gemäß Anspruch 16, **dadurch gekennzeichnet, dass** die ersten (10) und zweiten (11) Abschnitte an dem mindestens einen äußeren Gehäuse (9') bedeckt sind von dem entsprechenden Element (5) oder verbunden sind mit einer Bodenwand (15) des Hauptkörpers (2).

18. Struktur gemäß Anspruch 3, **dadurch gekennzeichnet, dass** mindestens eines der Elemente (5) mit Abschnitten unterschiedlicher Steifigkeiten versehen ist.

19. Struktur gemäß Anspruch 3, **dadurch gekennzeichnet, dass** die obere Fläche (7) von mindestens einem der Elemente (5) eine Oberflächenrauhigkeit hat, die sich unterscheidet von der der oberen Fläche (8) des Hauptkörpers (2).

## Revendications

1. Structure de selle, en particulier pour bicyclettes, motocyclettes et autres engins actionnés au moyen de pédales et munis d'un cadre, comprenant un corps principal (2) ayant des propriétés élastiques et de surface prédéterminées, qui définit une surface de siège (3) pour un utilisateur, des moyens (4) destinés à relier ledit corps principal (2) a un cadre d'engin, au moins un élément secondaire (5), des moyens de liaison démontables (6) destinés à fixer ledit au moins un élément secondaire (5) audit corps principal (2) de manière à définir ladite surface de siège (3) avec ce dernier,
**caractérisée en ce que** ledit au moins un élément secondaire (5) a des propriétés élastiques et de rugosité de surface différentes de celles dudit corps principal (2) pour permettre d'adapter facilement la structure de siège à différentes utilisations et pour maîtriser localement les propriétés précitées dans les zones présentant un intérêt.

2. Structure selon la revendication 1 **caractérisée en ce que** ledit corps principal (2) et ledit au moins un élément secondaire (5) ont des surfaces supérieures respectives (7, 8) raccordées l'une à l'autre de manière à rendre la surface de siège (3) sensiblement continue pour le corps de l'utilisateur.

3. Structure selon la revendication 1 **caractérisée en ce qu'**elle comprend une pluralité d'éléments secondaires (5) qui peuvent être fixés audit corps principal (2) de façon démontable à l'aide desdits moyens de liaison (6).

4. Structure selon la revendication 3 **caractérisée en ce que** ledit corps principal (2) comprend un logement (9, 9') pour chacun desdits éléments secondaires (5).

5. Structure selon la revendication 4 **caractérisée en ce que** lesdits moyens de liaison (6) sont placés à l'endroit de chacun desdits logements (9, 9').

6. Structure selon la revendication 5 **caractérisée en ce que** lesdits moyens de liaison (6) comprennent une première portion (10) d'une seule pièce avec ledit corps principal (2) pour chacun desdits logements (9, 9') et une seconde portion (11) d'une seule pièce avec l'élément secondaire (5) correspondant, et destinée à interagir avec ladite première portion (10) pour fixer l'élément secondaire correspondant (5) de façon démontable.

7. Structure selon la revendication 6 **caractérisée en ce que** ladite seconde portion (11) desdits moyens de liaison (6) a une rigidité différente de celle de l'élément (5) correspondant qui est d'une seule pièce avec elle.

8. Structure selon la revendication 6 **caractérisée en ce qu'**au moins un desdits logements (9) est formé dans les limites dudit corps principal (2).

9. Structure selon la revendication 8 **caractérisée en ce que** ledit au moins un logement intérieur (9) a une paroi d'interface (13) avec l'élément secondaire (5) correspondant qui est sensiblement concave.

10. Structure selon la revendication 8 **caractérisée en ce que** ledit au moins un logement intérieur (9) a une paroi d'interface (13) avec l'élément secondaire (5) correspondant qui est au moins partiellement convexe.

11. Structure selon la revendication 9 **caractérisée en ce que** la dite première portion (10) desdits moyens de liaison (6) a un bord (14) qui fait saillie en dehors de ladite paroi concave (13) pour supporter la seconde portion correspondante (11) des moyens de liaison (6).

12. Structure selon la revendication 11 **caractérisée en ce que** ledit bord en saillie (14) est prévu dans les limites dudit corps principal (2) ou est relié à une paroi inférieure (15) de ce dernier.

13. Structure selon la revendication 12 **caractérisée en ce que** ledit au moins un logement intérieur (9) a une ouverture inférieure (16) au niveau de la paroi inférieure (15) dudit corps principal (2) pour faciliter l'enlèvement de l'élément (5) correspondant.

14. Structure selon la revendication 7 **caractérisée en ce qu'**au moins un desdits logements (9') est prévu à un bord périphérique extérieur (12) dudit corps principal (2).

15. Structure selon la revendication 14 **caractérisée en ce que** ledit au moins un logement périphérique (9') a une paroi d'interface (13') avec l'élément (5) correspondant qui est au moins partiellement convexe ou plane.

16. Structure selon la revendication 15 **caractérisée en ce que** la ladite première portion (10) desdits moyens de liaison (6) a un prolongement (17) qui fait saillie sur ladite paroi au moins partiellement convexe (13') pour coopérer avec la seconde portion correspondante (11) des moyens de liaison (6).

17. Structure selon la revendication 16 **caractérisée en ce que** lesdites première (10) et seconde (11) portions situées à l'endroit de l'au moins un logement périphérique (9') sont recouvertes par l'élément (5) correspondant ou reliées à une paroi inférieure (15) du corps principal (2).

18. Structure selon la revendication 3 **caractérisée en ce qu'**au moins un desdits éléments (5) a des portions de différentes rigidités.

19. Structure selon la revendication 3 **caractérisée en ce que** la surface supérieure (8) d'au moins un desdits éléments (5) a une rugosité de surface différente de celle de la surface supérieure (7) dudit corps principal (2).
